# FASCICULE DE BREVET EUROPEEN

(11) **EP 2 196 437 B1**
(45) Date de publication et mention de la délivrance du brevet: **28.09.2011**
(21) Numéro de dépôt: 09290754.2
(22) Date de dépôt: 01.10.2009
(51) Int. Cl.: C01B 39/48, B01J 29/70

(54) **Procédé de préparation d'un solide cristallisé FU-1 utilisant un cation de type polyméthylène alpha-oméga diammonium comme structurant organique**
Verfahren zur Präparation eines kristallisierten FU-1-Festkörpers mit Hilfe eines Kations vom Typ Polymethylen-Apha-Omega-Diammonium als organischen Strukturanten
Method for preparing a FU-1 crystallised solid using a cation such as polymethylene alpha-omega diammonium as an organic structuring compound

(30) Priorité: 29.10.2008 FR 0806013
(43) Date de publication de la demande: 16.06.2010
(73) Titulaire: IFP Energies nouvelles, 92852 Rueil-Malmaison Cedex (FR)
(72) Inventeur: Goergen, Simone, 69007 Lyon (FR); Rouleau, Loic, 69390 Charly (FR); Patarin, Joël, 68720 Flaxlanden (FR)

(56) Documents cités:
- EP-A- 1 088 791
- FR-A- 2 369 871
- US-A- 4 209 498
- M. S. SPENCER, T. V. WHITTAM: "Catalytic conversion of methanol to hydrocarbons over zeolite Fu-1" JOURNAL OF MOLECULAR CATALYSIS,, vol. 17, no. 2-3, novembre 1982 (1982-11), pages 271-277, XP002544962

## Description

### Domaine technique

La présente invention se rapporte au domaine de la préparation de solides cristallisés de type zéolithe. Elle concerne plus précisément un nouveau procédé de préparation du solide cristallisé FU-1. Ce solide cristallisé présente la composition chimique suivante, exprimée en mole :

10-30 XO₂: Y₂O₃ : 0,25-1,50 Q : 0,05-0,50 M₂O : 0-40 H₂O

où X est choisi parmi le silicium et/ou le germanium, Y est au moins un élément choisi parmi l'aluminium, le fer, le gallium et le bore, Q représente la matière organique occluse dans les pores du solide cristallisé et est choisi parmi les composés alkylés d'un polyméthylène α-ω diammonium et M est un cation de métal alcalin ou le cation ammonium.

Le solide cristallisé FU-1 est généralement synthétisé par mélange en milieu aqueux d'au moins un élément X choisi parmi le silicium et/ou le germanium et d'au moins un élément Y choisi parmi l'aluminium, le fer, le gallium et le bore. Le mélange réactionnel comprend au moins un structurant organique azoté choisi parmi les composés alkylés d'un polyméthylène α-ω diammonium.

### Art antérieur

Le solide cristallisé FU-1 est un solide aluminosilicique de type zéolithe dont la topologie de charpente n'est pas connue à ce jour. Le brevet américain US 4,209,498 décrit le solide cristallisé FU-1 de formule molaire suivante : au moins 5 SiO₂ : Al₂O₃ : 0,6-1,4 R_{l/n}O : 0-40 H₂O, où R représente un cation de valence n. Ce brevet divulgue aussi le procédé de préparation dudit matériau FU-1. Le procédé de préparation comprend le mélange en milieu aqueux d'au moins une source de silicium, d'au moins une source d'aluminium et d'au moins un composé organique azoté jouant le rôle de structurant Q, qui est soit un dérivé méthylé de l'ammonium quaternaire soit un dérivé méthylé du phosphonium quaternaire. Le mélange réactionnel est ensuite placé sous pression autogène, sous agitation et à une température comprise entre 80 et 250°C jusqu'à la formation de cristaux de ce solide. Les conditions de préparation du solide cristallisé FU-1 telles qu'elles sont décrites dans le brevet US 4,209,498 sont très proches de celles de la zéolithe NU-1 (US 4,060,590). Cette zéolithe est d'ailleurs souvent observée comme impureté cristalline.

La présente invention se propose de fournir une nouvelle méthode de préparation du solide cristallisé FU-1.

### Résumé de l'invention

La présente invention se rapporte à un procédé de préparation d'un solide cristallisé FU-1 comprenant au moins les étapes suivantes :
i) le mélange en milieu aqueux basique d'au moins une source d'au moins un élément X choisi parmi le silicium, le germanium et le mélange de ces deux éléments, d'au moins une source d'au moins un élément Y choisi parmi l'aluminium, le fer, le gallium, le bore et le mélange d'au moins deux de ces éléments et d'au moins un composé alkylé du polyméthylène α-ω diammonium,
ii) le traitement hydrothermal dudit mélange jusqu'à ce que le solide cristallisé FU-1 se forme.

Il a été découvert que ledit composé alkylé du polyméthylène α-ω diammonium, mis en mélange, dans une solution aqueuse basique, avec au moins une source d'au moins un élément X choisi parmi le silicium, le germanium et le mélange de ces deux éléments et avec au moins une source d'au moins un élément Y choisi parmi l'aluminium, le fer, le gallium, le bore et le mélange d'au moins deux de ces éléments conduit, dans des conditions déterminées en terme de proportions des éléments présents dans le milieu aqueux basique, à la production d'un solide cristallisé FU-1 de haute pureté. Toute autre phase cristallisée ou amorphe est généralement et très préférentiellement absente du solide cristallisé FU-1 obtenu à l'issue du procédé de préparation de l'invention.

### Description de l'invention

La présente invention a pour objet un procédé de préparation d'un solide cristallisé FU-1 comprenant au moins les étapes suivantes :
i) le mélange en milieu aqueux basique d'au moins une source d'au moins un élément X choisi parmi le silicium, le germanium et le mélange de ces deux éléments, d'au moins une source d'au moins un élément Y choisi parmi l'aluminium, le fer, le gallium, le bore et le mélange d'au moins deux de ces éléments et d'au moins un composé alkylé du polyméthylène α-ω diammonium,
ii) le traitement hydrothermal dudit mélange jusqu'à ce que le solide cristallisé FU-1 se forme.

Le solide cristallisé obtenu par le procédé de l'invention est le solide FU-1 de type zéolithe. Ce solide cristallisé, sous sa forme brute de synthèse, présente la composition molaire chimique suivante : 10-30 XO₂ : Y₂O₃ : 0,25-1,50 Q : 0,05-0,50 M₂O : 0-40 H₂O où X est choisi parmi le silicium, le germanium et le mélange de ces deux éléments, Y est au moins un élément choisi parmi l'aluminium, le fer, le gallium, le bore, Q représente la matière organique occluse dans les pores dudit solide cristallisé sous sa forme brute de synthèse et est choisi parmi les composés alkylés d'un polyméthylène α-ω diammonium, et M est un cation de métal alcalin ou le cation ammonium. De manière préférée, l'élément X est le silicium, l'élément Y est l'aluminium et l'élément M est le sodium.

Conformément au procédé selon l'invention, ledit composé alkylé du polyméthylène α-ω diammonium joue le rôle de structurant. Plus précisément, ledit composé alkylé du polyméthylène α-ω diammonium présente la formule générale [R₁R₂R₃-N-(CH₂)ₙ-N-R₄R₅R₆]²⁺, où n est compris entre 3 et 12, de préférence entre 4 et 8, R₁ à R₆, identiques ou différents, sont des groupements alkyles ou hydroxyalkyles comportant 1 à 8 atomes de carbone, jusqu'à cinq des groupements R₁ à R₆ pouvant correspondre à l'élément hydrogène. De manière préférée, ledit composé alkylé du polyméthylène α-ω diammonium est le cation hexaméthonium (n = 6, R₁ = R₂ = R₃ = R₄ = R₅ = R₆ = CH₃).

Ledit composé alkylé du polyméthylène α-ω diammonium, introduit dans le mélange pour la mise en oeuvre de l'étape i) du procédé selon l'invention, se présente sous forme d'un sel. De manière très préférée, on utilise pour la mise en oeuvre de ladite étape i) du procédé de l'invention, le dihydroxyde du cation [R₁R₂R₃-N-(CH₂)ₙ-N-R₄R₅R₆]²⁺, plus spécialement le dihydroxyde d'hexaméthonium (CH₃)₃-N-(CH₂)₆-N(CH₃)₃²⁺, 2OH⁻. Le dihydroxyde du cation [R₁R₂R₃-N-(CH₂)ₙ-N-R₄R₅R₆]²⁺ est généralement obtenu à partir d'un dihalogénure du cation [R₁R₂R₃N-(CH₂)ₙ-N-R₄R₅R₆]²⁺, par exemple le dibromure du cation [R₁R₂R₃-N-(CH₂)ₙ-N-R₄R₅R₆]²⁺, préférentiellement le dibromure d'hexaméthonium. De manière préférée, le dihydroxyde du cation [R₁R₂R₃-N-(CH₂)ₙ-N-R₄R₅R₆]²⁺, préférentiellement le dihydroxyde d'hexaméthonium, est obtenu par traitement à température ambiante d'une solution de dibromure du cation [R₁R₂R₃-N-(CH₂)ₙ-N-R₄R₅R₆]²⁺, préférentiellement du dibromure d'hexaméthonium, avec de l'oxyde d'argent. Les sels de dibromure du cation [R₁R₂R₃-N-(CH₂)ₙ-N-R₄R₅R₆]²⁺ sont des espèces commercialisées ou peuvent être synthétisés par toute méthode connue de l'Homme du métier.

Conformément à l'invention, au moins une source d'au moins un élément X choisi parmi le silicium, le germanium et le mélange de ces deux éléments est incorporée dans le mélange pour la mise en oeuvre de l'étape i) du procédé de préparation. De manière préférée, ledit élément X est le silicium. La source de l'élément X peut être tout composé comprenant l'élément X et pouvant libérer cet élément en solution aqueuse sous forme réactive. Selon le mode de réalisation préféré dans lequel l'élément X est le silicium, la source de silicium peut être l'une quelconque de celles couramment utilisées dans la synthèse des zéolithes, par exemple de la silice solide en poudre, de l'acide silicique, de la silice colloïdale, de la silice dissoute ou du tétraéthoxysilane (TEOS). Parmi les silices en poudre, on peut utiliser les silices précipitées, notamment celles obtenues par précipitation à partir d'une solution de silicate de métal alcalin, des silices pyrogénées, par exemple l"Aerosil" et des gels de silice. On peut utiliser des silices colloïdales présentant différentes tailles de particules, par exemple de diamètre équivalent moyen compris entre 10 et 15 nm ou entre 40 et 50 nm, telles que celles commercialisées sous la marque déposée "LUDOX". Parmi les silices dissoutes, on peut utiliser les verres solubles ou silicates commercialisés contenant de 0,5 à 6,0, spécialement de 2,0 à 4,0 moles de SiO₂ par mole d'oxyde de métal alcalin ainsi que des silicates obtenus par dissolution de silice dans un hydroxyde de métal alcalin, un hydroxyde d'ammonium quaternaire ou un mélange de ceux-ci. On peut également utiliser des mélanges des sources citées ci-dessus. De manière très préférée, ladite source dudit élément X, lorsque X est le silicium, est une silice colloïdale.

Conformément à l'invention, au moins une source d'au moins un élément Y choisi parmi l'aluminium, le fer, le gallium, le bore et le mélange d'au moins deux de ces éléments est incorporée dans le mélange pour la mise en oeuvre de l'étape i) du procédé de préparation. De manière préférée, ledit élément Y l'aluminium. La source de l'élément Y peut être tout composé comprenant l'élément Y et pouvant libérer cet élément en solution aqueuse sous forme réactive. Selon le mode de réalisation préféré dans lequel Y est l'aluminium, la source d'aluminium est de préférence de l'aluminate de sodium ou un sel d'aluminium, par exemple du chlorure, du nitrate, de l'hydroxyde ou du sulfate, un alkoxyde d'aluminium ou de l'alumine elle-même, de préférence sous forme hydratée ou hydratable, comme de l'alumine colloïdale, de la pseudoboehmite, de l'alumine gamma ou du trihydrate alpha ou bêta. On peut également utiliser des mélanges des sources citées ci-dessus. De manière très préférée, ladite source dudit élément Y, lorsque Y est l'aluminium, est l'aluminate de sodium.

Conformément au procédé de préparation selon l'invention, le mélange réactionnel obtenu à l'étape i) présente avantageusement la composition molaire suivante, exprimée sous la forme d'oxydes:

| | |
|---|---|
| XO₂/Y₂O₃ | : de 14 à 19,5 et de manière préférée de 15 à 19, |
| OH⁻ /XO₂ | : 0,1 à 12,0, de préférence de 0,1 à 1,0 |
| (M⁺ + Q)/Y₂O₃ | : 0,5 à 100, de préférence de 1 à 50, de manière très préférée de 1 à 10, |
| Q/(M + Q) | : strictement supérieur à 0,4, de préférence de 0,5 à 0,8, |
| H₂O/XO₂ | : 15 à 50, de préférence de 25 à 50 et de manière très préférée de 30 à 48, |

où X et Y ont la même définition que précédemment, Q est le sel d'un cation [R₁R₂R₃-N-(CH₂)ₙ-N-R₄R₅R₆]²⁺, de préférence sous forme hydroxyde, M⁺ représente un cation de métal alcalin ou le cation ammonium. De manière préférée, M⁺ est le sodium Na⁺.

De manière générale, l'étape i) du procédé selon l'invention consiste à préparer un mélange réactionnel aqueux, en milieu basique, appelé gel, renfermant au moins une source d'au moins un élément X, au moins une source d'au moins un élément Y, au moins un sel du cation [R₁R₂R₃N-(CH₂)ₙ-N-R₄R₅R₆]²⁺, au moins une source d'anions hydroxyde et au moins une source de cation alcalin ou du cation ammonium. Les quantités desdits réactifs sont ajustées de manière à conférer à ce gel une composition permettant sa cristallisation en un solide cristallisé FU-1. Conformément à l'invention, ladite source d'anions hydroxyde est introduite dans le mélange réactionnel par le sel du cation [R₁R₂R₃N-(CH₂)ₙ-N-R₄R₅R₆]²⁺ dans lequel l'anion hydroxyde intervient en tant que contre-ion ou par une solution d'hydroxyde de sodium ou d'hydroxyde de potassium. De préférence, ladite source d'anions hydroxyde est introduite dans le mélange réactionnel par le sel du cation [R₁R₂R₃N-(CH₂)ₙ-N-R₄R₅R₆]²⁺. Ladite source de cation alcalin est avantageusement introduite dans le mélange réactionnel par ladite source dudit élément X et/ou par ladite source dudit élément Y mais elle peut aussi être introduite par une source extérieure telle qu'une solution d'hydroxyde de sodium lorsque M est le sodium. Quelle que soit la source d'introduction des anions hydroxydes et du cation alcalin, il convient que les valeurs des rapports molaires OH⁻ /XO₂, (M⁺ + Q)/Y₂O₃ et Q/(M⁺ + Q) soient respectées, conformément aux valeurs données plus haut dans la présente description.

De manière très préférée, on prépare un mélange réactionnel aqueux, en milieu basique, renfermant au moins une source de silicium, au moins une source d'aluminium, au moins un sel du cation [R₁R₂R₃N-(CH₂)ₙ-N-R₄R₅R₆]²⁺ sous sa forme hydroxyde, de préférence le dihydroxyde d'hexaméthonium, le cation alcalin étant avantageusement introduit par la source d'aluminium et la source de silicium.

Il peut être avantageux d'additionner des germes au mélange réactionnel au cours de ladite étape i) du procédé de l'invention afin de réduire le temps nécessaire à la formation des cristaux de solide cristallisé FU-1 et/ou la durée totale de cristallisation. Lesdits germes favorisent également la formation dudit solide cristallisé FU-1 au détriment d'impuretés. De tels germes comprennent des solides cristallisés, notamment des cristaux des solides FU-1 et/ou NU-1. Très préférentiellement, les germes ont la même nature cristalline et la même composition chimique que celle du solide cristallisé à préparer. Les germes cristallins sont généralement ajoutés dans un rapport massique germes/XO₂ compris entre 0,2 et 15. En l'absence de germes, le rapport molaire XO₂/Y₂O₃ est toujours compris entre 14 et 19,5 et de manière préférée entre 15 et 19 comme cela est indiqué plus haut dans la présente description. Conformément à l'étape ii) du procédé selon l'invention, le gel est soumis à un traitement hydrothermal, préférentiellement réalisé à une température comprise entre 80 et 250°C jusqu'à ce que le solide cristallisé FU-1 se forme. Le mélange réactionnel ou gel est avantageusement mis à réagir sous conditions hydrothermales sous une pression de réaction autogène, éventuellement avec apport d'un gaz, par exemple d'azote, à une température comprise entre 80 et 250°C, de préférence entre 120 et 220°C et de manière encore plus préférée entre 150 et 200°C, jusqu'à ce qu'il se forme des cristaux du solide FU-1. La durée nécessaire pour obtenir la cristallisation varie généralement entre 1 minute et plusieurs mois, de préférence entre 1 et 50 jours et de manière très préférée entre 5 et 30 jours selon la composition des réactifs, le mode de chauffage et de mélange, la température de travail et l'agitation. L'agitation est facultative, mais préférable, parce qu'elle abrège la durée de réaction.

A la fin de la réaction, lorsque ledit solide cristallisé zéolithique FU-1 est formé à la suite de la mise en oeuvre de ladite étape ii) du procédé de préparation selon l'invention, la phase solide formée dudit solide FU-1 est filtrée, lavée puis séchée. A ce stade, le solide cristallisé FU-1 et obtenu selon le procédé de l'invention est dit brut de synthèse et contient dans sa porosité intracristalline au moins un cation [R₁R₂R₃N-(CH₂)ₙ-N-R₄R₅R₆]²⁺. Le séchage est généralement réalisé à une température comprise entre 20 et 150°C, de préférence entre 60 et 120°C, pendant une durée avantageusement comprise entre 5 et 24 heures. Ledit solide cristallisé FU-1, séché, est généralement analysé par diffraction des rayons X, cette technique permettant également de déterminer la pureté dudit solide obtenu par le procédé de l'invention. De manière très avantageuse, le procédé de l'invention conduit à la formation d'un solide cristallisé FU-1, en l'absence de toute autre phase cristallisée ou amorphe. Ledit solide, après l'étape de séchage, est ensuite prêt pour des étapes ultérieures telles que la calcination et l'échange d'ions. Pour ces étapes, toutes les méthodes conventionnelles connues de l'Homme du métier peuvent être employées. Par exemple, afin d'obtenir la forme hydrogène du solide cristallisé préparé par le procédé selon l'invention, on peut effectuer un échange d'ions avec un acide, en particulier un acide minéral fort comme l'acide chlorhydrique, sulfurique ou nitrique, ou avec un composé tel que le chlorure, le sulfate ou le nitrate d'ammonium. L'échange d'ions peut être effectué par mise en suspension en une ou plusieurs fois avec la solution d'échange d'ions. Le solide cristallisé FU-1 peut être calciné avant ou après l'échange d'ions, ou entre deux étapes d'échange d'ions. Le solide cristallisé est, de préférence, calciné avant l'échange d'ions, afin d'éliminer toute substance organique incluse dans la porosité du solide cristallisé, dans la mesure où l'échange d'ions s'en trouve facilité.

Le solide cristallisé FU-1 obtenu par le procédé de l'invention peut être utilisé comme adsorbant pour le contrôle de la pollution, comme tamis moléculaire pour la séparation ou comme germes pour la synthèse de zéolithes de tout type structural. Lorsqu'il est utilisé sous forme de germes, il peut aussi bien se présenter sous sa forme brute de synthèse que sous sa forme calcinée ou que sous sa forme échangée.

L'invention est illustrée par les exemples suivants qui ne présentent, en aucun cas, un caractère limitatif.

### Exemples

### Exemple 1 : Synthèse du solide cristallisé FU-1 (solide A conforme à l'invention)

Une solution aqueuse d'hydroxyde d'hexaméthonium est préparée en laissant réagir 6 g de bromure d'hexaméthonium (Acros) avec 4,6 g d'oxyde d'argent (Alfa Aesar) dans 12 g d'eau distillée. Ce mélange est laissé sous agitation pendant une nuit à l'abri de la lumière. Après séparation du précipité d'AgBr par filtration, on récupère une solution à 25% massique en hydroxyde d'hexaméthonium.

Ensuite 9,34 g de cette solution sont ajoutés à 9,89 g de silice colloïdale (Ludox HS40, Sigma Aldrich) et 12 g d'eau distillée. Après 30 minutes d'agitation vigoureuse, on ajoute une solution formée par 0,78 g d'aluminate de sodium (Carlo Erba) et 28 g d'eau distillée. Ce mélange est mûri pendant 2 heures.

La composition molaire du mélange réactionnel est :

SiO₂/ Al₂O₃ = 16

OH⁻ / SiO₂ = 0,5

(Na⁺ + HM(OH)₂) / Al₂O₃ = 5,3

(HM: cation hexaméthonium)

HM(OH)₂ / (Na⁺ + HM(OH)₂) = 0,5

H₂O / SiO₂ = 45

Le mélange réactionnel est transféré dans un autoclave en inox (Autoclave France) de volume V = 100 mL. Le traitement hydrothermal est effectué sans agitation pendant une durée de 15 jours à 180°C par introduction de l'autoclave dans une étuve ventilée Binder de 50 L. Le produit est récupéré sur un filtre, lavé à l'eau distillée (500 mL) et séché à 100°C pendant 12 heures.

Le produit solide séché est analysé par diffraction de rayons X. L'analyse démontre que le produit obtenu est un solide cristallisé FU-1, seule phase cristallisée présente.

### Exemple 2 : Synthèse du solide cristallisé FU-1 (solide B conforme à l'invention)

Une solution aqueuse d'hydroxyde d'hexaméthonium est préparée comme décrit dans l'exemple 1. Ensuite 9,36 g de cette solution sont ajoutés à 9,91 g de silice colloïdale (Ludox HS40, Sigma Aldrich) et 12 g d'eau distillée. Après 30 minutes d'agitation vigoureuse, on ajoute une solution formée par 0,65 g d'aluminate de sodium (Carlo Erba) et 28 g d'eau distillée. Ce mélange est mûri pendant 2 heures.

La composition molaire du mélange réactionnel est :

SiO₂ / Al₂O₃ = 19

OH⁻ / SiO₂ = 0,46

+ (Na⁺ + HM(OH)₂) / Al₂O₃ = 5,8

(HM: cation hexaméthonium)

HM(OH)₂ / (Na⁺ + HM(OH)₂) = 0,49

H₂O / SiO₂ = 45

Le mélange réactionnel est transféré dans un autoclave en inox (Autoclave France) de volume V = 100 mL. Le traitement hydrothermal est effectué sans agitation pendant une durée de 15 jours à 180°C par introduction de l'autoclave dans une étuve ventilée Binder de 50 L. Le produit est récupéré sur un filtre, lavé à l'eau distillée (500 mL) et séché à 100°C pendant 12 heures.

Le produit solide séché est analysé par diffraction de rayons X. L'analyse démontre que le produit obtenu est un solide cristallisé FU-1, seule phase cristallisée présente.

### Exemple 3 : Synthèse du solide cristallisé FU-1 (solide C conforme à l'invention)

Une solution aqueuse d'hydroxyde d'hexaméthonium est préparée comme décrit dans l'exemple 1. Ensuite 9,35 g de cette solution sont ajoutés à 9,91 g de silice colloïdale (Ludox HS40, Sigma Aldrich) et 12 g d'eau distillée. Après 30 minutes d'agitation vigoureuse, on ajoute une solution formée par 0,69 g d'aluminate de sodium (Carlo Erba) et 28 g d'eau distillée. Ce mélange est mûri pendant 2 heures.

La composition molaire du mélange réactionnel est :

SiO₂/ Al₂O₃ = 18

OH⁻ / SiO₂ = 0,46

(Na⁺ + HM(OH)₂) / Al₂O₃ = 5,6

(HM: cation hexaméthonium)

HM(OH)₂ / (Na⁺ + HM(OH)₂) = 0,48

H₂O / SiO₂= 44,6

Le mélange réactionnel est transféré dans un autoclave en inox (Autoclave France) de volume V = 100 mL. Le traitement hydrothermal est effectué sans agitation pendant une durée de 15 jours à 180°C par introduction de l'autoclave dans une étuve ventilée Binder de 50 L. Le produit est récupéré sur un filtre, lavé à l'eau distillée (500 mL) et séché à 100°C C pendant 12 heures.

Le produit solide séché est analysé par diffraction de rayons X. L'analyse démontre que le produit obtenu est un solide cristallisé FU-1, seule phase cristallisée présente.

## Revendications

1. Procédé de préparation d'un solide cristallisé FU-1 comprenant au moins les étapes suivantes :
i) le mélange en milieu aqueux basique d'au moins une source d'au moins un élément X choisi parmi le silicium, le germanium et le mélange de ces deux éléments, d'au moins une source d'au moins un élément Y choisi parmi l'aluminium, le fer, le gallium, le bore et le mélange d'au moins deux de ces éléments et d'au moins un composé alkylé du polyméthylène α-ω diammonium, ledit mélange réactionnel présentant la composition molaire suivante, exprimée sous la forme d'oxydes :
| | |
|---|---|
| XO₂/Y₂O₃ | : de 14 à 19,5, |
| OH⁻ /XO₂ | : 0,1 à 12,0, |
| (M⁺ + Q)Y₂O₃ | : 0,5 à 100, |
| Q/(M⁺ + Q) | : strictement supérieur à 0,4, |
| H₂O/XO₂ | : 15 à 50, |
où M⁺ représente un cation de métal alcalin ou le cation ammonium et Q est le sel d'un cation [R₁R₂R₃-N-(CH₂)ₙ-N-R₄R₅R₆]²⁺ où n est compris entre 3 et 12, R₁ à R₆, identiques ou différents, sont des groupements alkyles ou hydroxyalkyles comportant 1 à 8 atomes de carbone, jusqu'à cinq des groupements R₁ à R₆ pouvant correspondre à l'élément hydrogène,
ii) le traitement hydrothermal dudit mélange jusqu'à ce que le solide cristallisé FU-1 se forme.

2. Procédé de préparation selon la revendication 1 tel que ledit composé alkylé du polyméthylène α-ω diammonium est le dihydroxyde du cation [R₁R₂R₃-N-(CH₂)ₙ-N-R₄R₅R₆]²⁺_{.}

3. Procédé de préparation selon la revendication 2 tel que ledit composé alkylé du polyméthylène α-ω diammonium est le dihydroxyde d'hexaméthonium (CH₃)₃-N-(CH₂)₆-N(CH₃)₃²⁺, 2OH⁻.

4. Procédé de préparation selon l'une des revendications 1 à 3 tel que l'élément X est le silicium.

5. Procédé de préparation selon la revendication 4 tel que ladite source dudit élément X est la silice colloïdale.

6. Procédé de préparation selon l'une des revendications 1 à 5 tel que l'élément Y est l'aluminium.

7. Procédé de préparation selon la revendication 6 tel que ladite source dudit élément Y est l'aluminate de sodium.

8. Procédé de préparation selon l'une des revendications 1 à 7 tel que des germes sont additionnés au mélange réactionnel au cours de ladite étape i).

9. Procédé de préparation selon l'une des revendications 1 à 8 tel que ledit traitement hydrothermal est réalisé sous une pression de réaction autogène à une température comprise entre 80 et 250°C.

## Claims

1. A process for preparing a FU-1 crystalline solid, comprising at least the following steps:
i) mixing, in a basic aqueous medium, at least one source of at least one element X selected from silicon, germanium and a mixture of said two elements, at least one source of at least one element Y selected from aluminium, iron, gallium, boron and a mixture of at least two of said elements and at least one alkylated polymethylene a-w diammonium compound, said reaction mixture having the following molar composition, expressed in the oxide form:
| | | |
|---|---|---|
| XO₂/Y₂O₃ | : | 14 to 19.5; |
| OH⁻/XO₂ | : | 0.1 to 12.0; |
| (M⁺ + Q)/Y₂O₃ | : | 0.5 to 100; |
| Q/(M⁺ + Q) | : | strictly more than 0.4; |
| H₂O/XO₂ | : | 15 to 50; |
in which M⁺ represents an alkali metal cation or the ammonium cation and Q is the salt of a [R₁R₂R₃-N-(CH₂)ₙ-N-R₄R₅R₆]²⁺ cation where n is in the range 3 to 12, R₁ to R₆, which may be identical or different, are alkyl or hydroxyalkyl groups containing 1 to 8 carbon atoms, and up to five of groups R₁ to R₆ may correspond to the element hydrogen;
ii) treating said mixture hydrothermally until the FU-1 crystalline solid is formed.

2. A preparation process according to claim 1, in which said alkylated polymethylene α-ω diammonium compound is the dihydroxide of the [R₁R₂R₃-N-(CH₂)ₙ-N-R₄R₅R₆]⁺² cation.

3. A preparation process according to claim 2, in which said alkylated polymethylene α-ω diammonium compound is hexamethonium dihydroxide (CH₃)₃-N-(CH₂)₆-N(CH₃)₃²⁺, 2OH⁻.

4. A preparation process according to one of claims 1 to 3, in which the element X is silicon.

5. A preparation process according to claim 4, in which said source of said element X is colloidal silica.

6. A preparation process according to one of claims 1 to 5, in which the clement Y is aluminum.

7. A preparation process according to claim 6, in which said source of said element Y is sodium aluminate.

8. A preparation process according to one of claims I to 7, in which seeds are added to the reaction mixture during said step i).

9. A preparation process according to one of claims 1 to 8, in which said hydrothermal treatment is carried out at an autogenous reaction pressure and at a temperature in the range 80°C to 250°C.

## Patentansprüche

1. Verfahren zur Herstellung eines kristallisierten Feststoffs FU-1, das mindestens die folgenden Schritte umfasst:
(i) Vermischen in wässrigem basischen Milieu mindestens einer Quelle mindestens eines Elements X, das aus Silicium, Germanium und der Mischung aus diesen beiden Elementen ausgewählt ist, mindestens einer Quelle mindestens eines Elements Y, das aus Aluminium, Eisen, Gallium, Bor und der Mischung mindestens zweier dieser Elemente ausgewählt ist, und mindestens einer alkylierten Verbindung des a-w-Diammoniumpolymethylens, wobei die Reaktionsmischung die folgende molare Zusammensetzung, ausgedrückt in Form der Oxide, aufweist:
| | | |
|---|---|---|
| XO₂/Y₂O₃ | : | von 14 bis 19,5, |
| OH⁻/XO₂ | : | 0,1 bis 12,0, |
| (M⁺ + Q)/Y₂O₃ | : | 0,5 bis 100, |
| Q/(M⁺ + Q) | : | unabdingbar höher als 0,4, |
| H₂O/XO₂ | : | 15 bis 50, |
wobei M⁺ ein Alkalimetallkation oder das Ammoniumkation darstellt und Q das Salz eines Kations [R₁R₂R₃-N-(CH₂)ₙ-N-R₄R₅R₈]²⁺ ist, wobei n im Bereich von 3 bis 12 liegt, R₁ bis R₆, die identisch oder verschiedenartig sein können, Alkyl- oder Hydroxyalkylgruppen sind, welche 1 bis 8 Kohlenstoffatome aufweisen, wobei bis zu fünf der Gruppen R₁ bis R₆ dem Element Wasserstoff entsprechen können,
(ii) hydrothermale Behandlung der Mischung, bis sich der kristallisierte Feststoff FU-1 bildet.

2. Herstellungsverfahren nach Anspruch 1, derart, dass es sich bei der alkylierten Verbindung des α-ω-Diammoniumpolymethylens um das Dihydroxid des Kations [R₁R₂R₃-N-(CH₂)ₙ-N-R₄R₅R₆]²⁺ handelt.

3. Herstellungsverfahren nach Anspruch 2, derart, dass es sich bei der alkylierten Verbindung des α-ω-Diammoniumpolymethylens um Hexamethoniumdihydroxid (CH₃)₃-N-(CH₂)₆-N(CH₃)₃²⁺, 2OH⁻ handelt.

4. Herstellungsverfahren nach einem der Ansprüche 1 bis 3, derart, dass es sich bei dem Element X um Silicium handelt.

5. Herstellungsverfahren nach Anspruch 4, derart, dass es sich bei der Quelle des Elements X um kolloidales Siliciumdioxid handelt.

6. Herstellungsverfahren nach einem der Ansprüche 1 bis 5, derart, dass es sich bei dem Element Y um Aluminium handelt.

7. Herstellungsverfahren nach Anspruch 6, derart, dass es sich bei der Quelle des Elements Y um Matriumaluminat handelt.

8. Herstellungsverfahren nach einem der Ansprüche 1 bis 7, derart, dass der Reaktionsmischung im Laufe des Schrittes i) Kristallisationskeime zugesetzt werden.

9. Herstellungsverfahren nach einem der Ansprüche 1 bis 8, derart, dass die hydrothermale Behandlung unter einem Druck, der von der Reaktion selbst erzeugt wird, bei einer Temperatur im Bereich von 80 bis 250 °C durchgeführt wird.
